# EUROPÄISCHE PATENTANMELDUNG

(11) **EP 1 146 340 A2**
(43) Veröffentlichungstag der Anmeldung: **17.10.2001**
(21) Anmeldenummer: 01201063.3
(22) Anmeldetag: 22.03.2001
(51) Int. Cl.: G01N 35/02

(54) **Analysenvorrichtung und Analysiereinrichtung**

(30) Priorität: 14.04.2000 DE 10018876
(71) Anmelder: Mettler-Toledo GmbH, 8606 Greifensee (CH)
(72) Erfinder: Lang, Karl, 8645 Jona (CH); Aichert, Albert, 8625 Dürnten (CH); Gordon, Craig, 8606 Nänikon (CH)

(57) **Zusammenfassung**

Eine Analysenvorrichtung weist ein Gerätegehäuse (1) mit einem Bewegungsantrieb (2) für einen Probenträger (4) auf, der wenigstens zwei Halteanordnungen (5) für zu analysierende Proben besitzt. Die Proben können mit Hilfe des Bewegungsantriebes (2) jeweils schrittweise entlang einer vorbestimmten Bahn an eine am Gerätegehäuse (1) montierte Analysiereinrichtung (16 bzw. 16') gebracht werden. Die turmartige Analysiereinrichtung (16, bzw. 16') ist mit Hilfe einer zerstörungsfrei lösbaren, mindestens zweiteiligen Montageeinrichtung (15, 17) am Gerätegehäuse (1) montierbar. Dabei ist von der Montageeinrichtung (15, 17) ein erster Montageteil (15) am Gerätegehäuse (1) und ein weiterer Montageteil (17) an der Analysiereinrichtung (16 bzw. 16') vorgesehen. Zum Ermöglichen des Montierens mindestens zweier Analysiereinrichtungen (16, 16') oder einer solchen Einrichtung (16 bzw. 16') an beliebiger Stelle am Gerätegehäuse (1) - ist eine Mehrzahl der ersten Montageteile (15) jeweils einer Montageeinrichtung (15, 17) vorgesehen, wobei bevorzugt mindestens zwei Analysiereinrichtungen (16, 16') am Gerätegehäuse (1) entlang einer Bewegungsbahn von auf einem Probeträger (4) gehaltenen Proben (32) befestigt sind. Eine entsprechende turmartige Analysiereinrichtung (16 bzw. 16') zeichnet sich dann dadurch aus, daß sie eine zerstörungsfrei lösbare Montageeinrichtung (17-19, 36) zur Befestigung an einem Gerätegehäuse (1) aufweist.

## Beschreibung

Die Erfindung bezieht sich auf eine Analysenvorrichtung nach dem Oberbegriff des Anspruches 1 bzw. 2 sowie auf eine Analysiereinrichtung mit den Merkmalen des Oberbegriffes des Anspruches 16. Mit solchen Analysenvorrichtungen bzw. Analysiereinrichtungen werden im allgemeinen Titrationen durchgeführt, doch ist die Erfindung nicht auf solche beschränkt.

Derartige Analysenvorrichtungen sind in verschiedener Art am Markte. Die Analysiereinrichtung ist im allgemeinen turmähnlich vom Gerätegehäuse aufragend, um Analyseelektroden, Röhrchen od.dgl. von oben her in einen Probenbecher einzubringen, so daß anschließend die Analyse (oder auch nur eine Waschung, um nach der Analyse zu reinigen) durchgeführt werden kann. Der Probenträger ist im allgemeinen scheibenförmig und drehbar und besitzt an seinem Umfange Halteeinrichtungen für zu analysierende Proben bzw. ihre Becher, doch ist die vorliegende Erfindung auch darauf nicht beschränkt. Es wäre beispielsweise denkbar, daß ein Linearantrieb vorgesehen ist, um einen solchen, z.B. rechteckförmigen, Probenträger an der Analysiereinrichtung vorbeizutransportieren.

Die Arbeit im Laboratorium geht für gewöhnlich so vor sich, daß ein Probenträger mit (allenfalls schon vorbehandelten) Proben bzw. Probegläsem bestückt und anschließend auf das Gerätegehäuse mit dem Bewegungsantrieb aufgesetzt wird. Dann wird eine Probe nach der anderen schrittweise zur Analysiereinrichtung gebracht, diese senkt die mit ihr verbundenen Analysierelektroden oder andere Analysegeräte in den jeweiligen Becher, eine oder mehrere Messungen werden durchgeführt, worauf der nächste Schritt beginnt. Dabei ist auch in Betracht zu ziehen, daß gewisse Analysen, wie die Bestimmung der Leitfähigkeit einer Probe und des pH-Wertes einander beeinflussen würden, weshalb sie nicht sinnvoll mittels einer einzigen Analysiereinrichtung durchzuführen sind. In diesem Falle ist es bisher notwendig, die betreffende Probe nach der ersten Analyse auf einen weiteren Probenträger zu bringen und die ganze Prozedur mit einer anderen Analysiereinrichtung zu wiederholen.

Die obige Schilderung zeigt, daß eigentlich viel Zeit vergeht, bis die letzte Probe eines Probeträgers analysiert wurde. Dies führt dann dazu, daß für eine raschere Durchführung größerer Mengen von Analysen mehrere solche Analysenvorrichtungen zum Einsatz kommen müssen, was Platz-, vor allem aber auch Investitionsaufwand bedeutet.

Der Erfindung liegt daher die Aufgabe zugrunde, die Anwendungsmöglichkeiten einer Analysenvorrichtung der eingangs genannten Art zu erweitern, insbesondere aber den Betrieb mit einer solchen Analysevorrichtung effizienter zu gestalten. Dies gelingt erfindungsgemäß in überraschend einfacher Weise durch die kennzeichnenden Merkmale des Anspruches 1 bzw. 2, wobei in letzterem Falle die mindestens zwei Analysiereinrichtungen gegebenenfalls auch nicht zerstörungsfrei lösbar am Gerätegehäuse befestigt sein können.

Dadurch, daß auf diese Weise mindestens zwei Analysiereinrichtungen am Gerät montierbar sind, ergeben sich ganz neue Anwendungskombinationen, wie:
- Es können mehr Meßsonden, verteilt auf die mindestens zwei Analysiereinrichtungen, vorgesehen und damit zu gleicher Zeit mehr Messungen durchgeführt werden;
- einander ungünstig beeinflussende Messungen sind auf unterschiedlichen Analysiereinrichtungen ausführbar;
- am Orte des einen Turmes ("Analysiereinrichtung") kann eine Vorbereitung einer jeweiligen Probe, z.B. durch Zugabe von Reagenzien über Pipetten, durchgeführt, in der nächsten gemessen, z.B. titriert, werden;
- ein Turm ("Analysiereinrichtung") kann die Messung vornehmen, wogegen der andere anschließend wäscht und reinigt;
- am einen Turm ("Analysiereinrichtung") kann, die Messung und/oder das Waschen vorgenommen werden, wogegen am anderen das Absaugen einer Probenflüssigkeit aus ihrem Behälter erfolgt;
- die Analysiereinrichtungen können einander gegenüberliegend so angeordnet werden, daß beide dieselbe Aufgabe bewältigen, so daß die Meßarbeit doppelt so rasch vor sich geht;
- zwei Analysiereinrichtungen können sich die Arbeit teilen, indem so von beiden Analysiereinrichtungen mehr Messungen gleichzeitig durchgeführt werden;
- ist das Tastenfeld mit dem Gerätegehäuse verbunden, so kann die Analysiereinrichtung je nach Bequemlichkeit und Aufgabe links oder rechts davon aufgestellt werden (wobei eine zweite Analysiereinrichtung nicht einmal montiert zu werden braucht);
- durch Anordnung von mehr als zwei Analysiereinrichtungen können die obigen Möglichkeiten noch beliebig miteinander kombiniert werden;
- da so das Gerät modular aufgebaut werden kann, läßt es sich im Bedarfsfall (z.B. bei größerem Anfall an zu bewältigenden Analysen) beliebig erweitern, ohne gleich ein zusätzliches Gerät beschaffen und unterbringen zu müssen.

Wenn mindestens zwei derart montierten Analysiereinrichtungen unterschiedliche Analyseaufgaben durchführen sollen, so ist es vorteilhaft, wenn jeder Analysiereinrichtung mit Hilfe mindestens eines Programmgebers wenigstens ein vorbestimmtes Analysenprogramm zuordenbar ist bzw. wenn der Analysenvorrichtung mit Hilfe mindestens eines Programmgebers mindestens zwei Analysenprogramme gleichzeitig zuordenbar sind, und die Auswahl der Analysenprogramme mit Hilfe einer anschließbaren Steuereinrichtung erfolgt.

Da nun aber erfindungsgemäß die turmartige Analysiereinrichtung ein von der Analysenvorrichtung trennbarer und selbständiger Teil sein wird, bezieht sich die vorliegende Erfindung auch auf eine Analysiereinrichtung, die zur wahlweisen Montage auf einem Gerätegehäuse die kennzeichnenden Merkmale des Anspruches 16 aufweist.

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine erfindungsgemäß aufgebaute Analysenvorrichtung in perspektivischer, explodierter Darstellung, von der
- Fig. 2: einen Schnitt durch die Achse II-II, sowie die vertikale Achse in Fig. 1 veranschaulicht, und
- Fig. 3: eine Variante in einer der Fig. 1 ähnlichen Perspektivansicht ist.

In einem Gerätegehäuse 1 ist ein strichliert angedeuteter Bewegungsantrieb 2 für einen über eine strich-punktiert gezeigte Welle zu einer Drehung antreibbaren, scheibenförmigen Probenträger **4.** Der Probenträger weist eine Mehrzahl von Halteanordnungen 5 in Form von Stecklöchem für Probebecher entlang einer kreisförmigen Umfangsbahn auf. Der Probenträger 4 hat einen Handgriff 6, so daß er erst mit Proben bestückt, dann am Handgriff 6 ergriffen und auf die aus dem Gehäuse 1 ragende Welle 3 gesetzt werden kann, die beispielsweise unterhalb des Handgriffes 6 in eine formschlüssige Kupplungsöffnung (nicht dargestellt) zur drehschlüssigen Kupplung eingreifen kann.

Der Probenträger 4 kann an seiner Unterseite Code-Markierungen (magnetische, optische od.dgl.) aufweisen, die beispielsweise die Art der an den in den Halteanordnungen 5 steckenden Proben durchzuführenden Analyse und/oder die durchzuführenden Schritte des Bewegungsantriebes 2 an das Gerät weitergibt. Beispielsweise kann es erwünscht sein, etwa nur den Inhalt jeder zweiten Probe zu analysieren, während für die dazwischenliegende Probe ein anderes Analysenprogramm vorgesehen ist (wie später noch erläutert wird). Für diese Code-Markierungen ist mindestens eine stationäre Leseeinrichtung an der Oberseite des Gerätegehäuses 1, beispielsweise bei 7 oder 7', vorgesehen, die die, z.B. bei 8 am Probenträger 4 vorgesehenen, Markierungen liest. Das Ergebnis dieser Lesung wird einem Programmgeber 9 mitgeteilt, der seinerseits entweder den Bewegungsantrieb 2 über eine Leitung 10 steuert und/oder über eine interne Leifung 11 und ein daran angestecktes Kabel 11' an ein Steuergerät 12 weitergibt, das zweckmäßig als Computer ausgebildet ist. Dieser Computer 12 kann dann gleichzeitig dazu benützt werden, die über Kabel 13 (nur abgerissen, ohne die an ihrem Ende befindlichen Meßsonden, dargestellt) herangeführten Meßdaten auszuwerten.

Das Gerätegehäuse 1 besitzt einen aufrecht stehenden Umfangsflansch 14, in dessen obere Fläche 14' eine Reihe von gegenseitig beabstandeten Montagelöchern 15 eingebracht ist. Der Abstand zwischen einander benachbarten Montagelöchern 15 entspricht entweder genau dem Abstand der Halteausnehmungen 5 des Probenträgers 4 oder einem Bruchteil mit einem ganzzahligen Nenner, also z.B. ½ oder ¼ davon, im vorliegenden Ausführungsbeispiel dem halben Abstand. Die Mantelfläche 14" dieses Flansches 14 steht zur oberen, etwa horizontalen Fläche 14' unter einem, vorzugsweise rechten, Winkel. Wenn nun ein als Analysiereinrichtung wirkender Turm 16 mittels in die Löcher 15 eingeschraubten Montageschrauber 17 fixiert wird, kann sich ein Fuß 18 des Turmes 16 an der oberen Fläche 14' abstützen, wogegen sich eine etwa vertikal verlaufende Fläche 19 an der Mantelwand 14" abstützt. Auf diese Weise ist ein stabiler Halt des Turmes 16 am Umfangsflansch 14 mit nur zwei Montageschrauben 17 gesichert, indem die Flächen 14', 14" bzw. 18, 19 als Abstützflächen wirken.

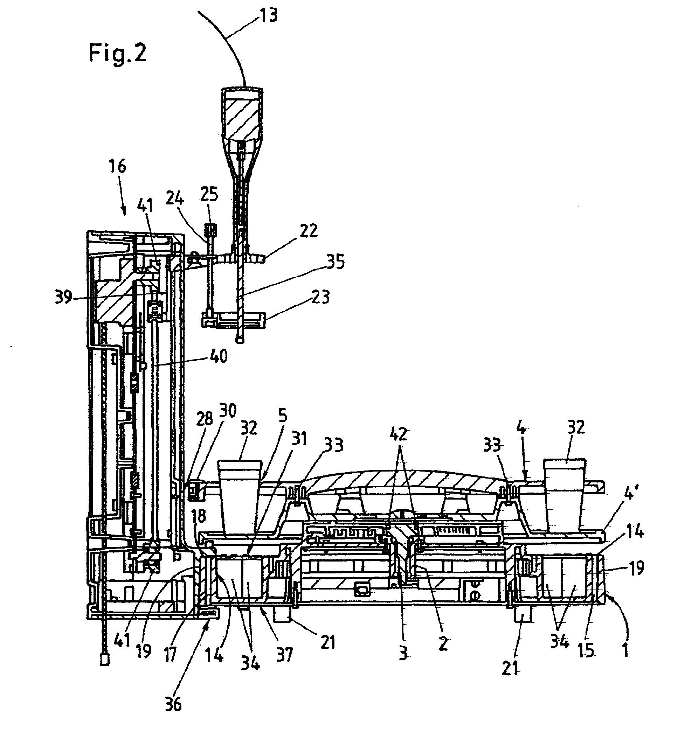

Es versteht sich, daß an Stelle von zwei Montageschrauben 17 auch deren mehrere vorgesehen sein können. Auch kann die Anordnung der Montagelöcher 15 anders vorgesehen werden, beispielsweise in Form eines Kranzes von Löchern 20. An Stelle von Montageschrauben könnten Steckdübel, Stifte, Krallen oder ähnliche Befestigungsmittel verwendet werden. Ferner könnten mehr als zwei Abstützflächen 18, 19 vorgesehen sein, etwa wenn der Turm noch eine dritte, der Fläche 19 gegenüberliegende und den Flansch 14 übergreifende Fläche besäße, so daß er rittlings auf dem Flansch 14 sitzt. Ebenso könnte eine weitere horizontale Abstützfläche des Turmes 16 das Gerätegehäuse 1 untergreifen (vgl. die mit den Flächen 18, 19 ein "U" bildende Platte 36 in Fig. 2, welche an einer Unterfläche 37 des Gerätegehäuses 1 anliegt und von der Montageschraube 17, ebenso wie die dazu parallele Fußfläche 18, durchsetzt wird), welches zweckmäßig sowieso durch, beispielsweise justierbare, Füße 21 von der Standfläche eines (nicht dargestellten) Laboratoriumstisches abgehoben ist.

Die dargestellte Analysiereinrichtung (nun im weitesten Sinne zu verstehen, da ihr ja erfindungsgemäß gegebenenfalls nur Teilaufgaben der Analyse, wie Waschen oder Absaugen, zugeordnet werden) bzw. - allgemeiner - der Turm 16 ist vorteilhaft mit einem unterhalb des Halters 22 für Elektroden, Pipetten od.dgl. angeordneten Waschring 23 versehen, der vom Halter 22 bei dessen vertikalen Bewegung entlang des Turmes 16 über am Ende von Stangen 24 vorgesehene Mitnehmer 25 von einer darunter stehenden Probe (vgl. die Darstellung der Fig. 2) abgehoben wird. Beim Aufsetzen auf den Probenbecher kann sich jedoch der Waschring 23 mit den an ihm befestigten Stangen 24 relativ zum Halter 22 und auf diesen zu bewegen, wie dies in der deutschen Patentanmeldung 10001895.5 beschrieben ist, deren Inhalt hier durch Bezugnahme als geoffenbart gelten soll.

An der Oberseite des Turmes 16 sind zwei Einsteckschlitze 26 dargestellt, in welche Programmkarten 27 einschiebbar sind, um das Analysenprogramm festzulegen. Durch Bedienung entsprechender Tasten des Tastenfeldes 12' des Computers 12 kann dann gegebenenfalls auch noch eine Auswahl zwischen den beiden Programmen entsprechend den Karten 27 getroffen werden. Allerdings ist dies nur eine von vielen Möglichkeiten. Denn weder müssen die Einsteckschlitze 26 an der gezeigten Stelle liegen, noch ist es überhaupt erforderlich, daß solche Programmkarten wahlweise in die Schlitze 26 eingeschoben werden, vielmehr können sie (oder eine kleinere oder größere Zahl von ihnen) gewünschtenfalls fest verdrahtet im Gerätegehäuse 1 oder im jeweiligen Turm 16 vorliegen, wie es auch denkbar wäre, die Programme nur im Computer 12 vorliegen zu haben, in dem sie dann durch Tastenbedienung entsprechend auswählbar sind. Es hat jedoch seinen Vorteil, wenn die Programme im jeweiligen Turm 16 vorliegen, weil es dann leichter und übersichtlicher ist, bei einer Mehrzahl von Türmen (ein zweiter Turm 16' ist strich-punktiert dargestellt) den einzelnen Türmen unterschiedliche Aufgaben zuzuordnen.

Ein weiterer Vorteil ist dadurch gegeben, daß am jeweiligen Turm eine das Programm bzw. den Bewegungsablauf steuernde Leseeinrichtung im Bereich eines Feldes 28 vorgesehen sein kann. Diese Leseeinrichtung beinhaltet beispielsweise eine Hallsonde, und der Probenträger 4 kann, insbesondere an seinem Umfang, eine Reihe von jeweils einer Halteausnehmung 5 zugeordneten Stecklöchern 29 besitzen, in welche zur Bewegungsprogrammsteuerung Magnete 30 befestigbar sind. Damit kann beispielsweise, z.B. in Abhängigkeit von einem entsprechenden Befehl an den Computer 12, vom jeweiligen Magneten 30 ein besonderes Programm ausgelöst werden, etwa daß die so markierte Probe nicht auf ihren pH-Wert zu prüfen und deshalb an dem jeweiligen, den pH Wert prüfenden Turm ungeprüft vorbeigeführt werden soll. Dies würde bedeuten, daß etwa am Turm 16' beim jeweiligen Bewegungsschritt des Probenträgers 4 eine Probe angehalten wird, gleichzeitig aber der Halter 22 am Turm 16 nicht abgesenkt wird, vor dem ein solcher Magnet 30 gerade zu liegen kommt. Insofern wird dann auf diese Weise die Bewegung des Halters 22 gesteuert, obwohl beim gleichzeitigen Eintreffen von Magneten 30 an beiden Türmen 16 und 16' das entsprechende Programm das Weiterschalten des Probenträgers 4 um einen Schritt auslösen kann. Es versteht sich, daß die Leseeinrichtung 28 sehr unterschiedlich ausgebildet werden kann, beispielsweise zum Lesen einer am Probenträger 4 statt eines Magneten 30 angebrachten Strich- oder Farbmarkierung oder einer anderen Markierung 30.

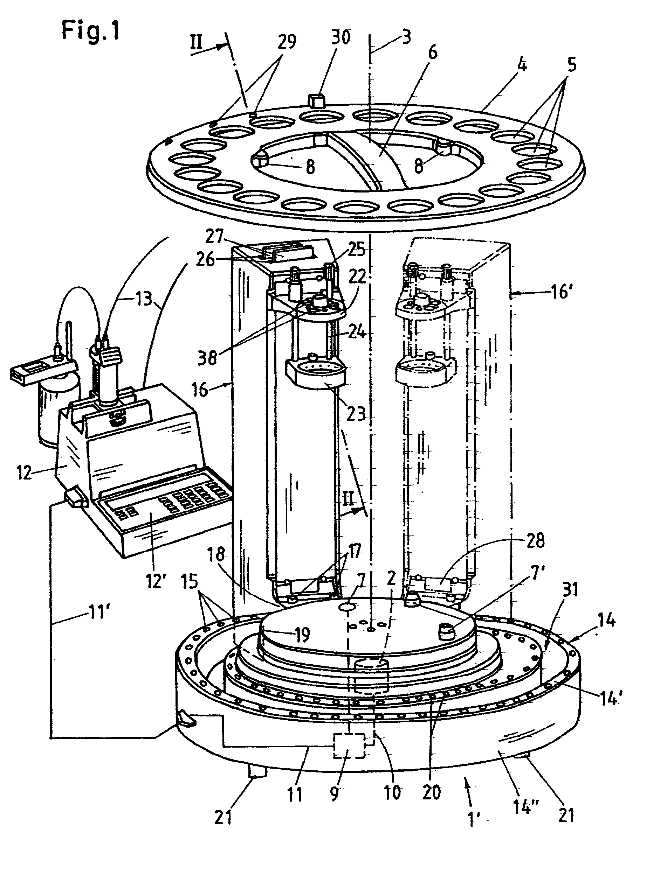

Es ist keineswegs unbedingt erforderlich, einen Flansch 14 am Gerätegehäuse 1 vorzusehen, der im vorliegenden Ausführungsbeispiel eine ringförmige Ausnehmung bzw. einen "Graben" 31 begrenzt. Der Zweck dieses "Grabens" 31 soll unten an Hand der Fig. 2 erläutert werden, die auch die in Fig. 1 nur grobschematisch gezeigte Ausbildung des Probenträgers 4 im einzelnen veranschaulicht

Fig. 2 zeigt zwei Probenbecher 32 in entsprechenden Halteausnehmungen 5 des Probenträgers 4. Nach Fig. 1 ist der Probenträger 4 als bloße Scheibe ausgebildet, was im Rahmen der Erfindung durchaus möglich wäre. Nach Fig. 2 besteht er aber zu zwei über Schrauben 33 miteinander verbundenen Scheiben 4 und 4' wovon die untere Scheibe 4' als Abstellfläche für die Probenbecher 32 dient. Diese untere Scheibe 4' besitzt Kupplungsstifte 42, die in an der Oberseite der Welle 3 angeordnete entsprechende Löcher einsteckbar sind.

Die Ausbildung als Abstellfläche für die Probenbecher 32 bedeutet nun aber nicht, daß es nicht erwünscht sein mag, auch die untere Scheibe 4' gegebenenfalls mit den Halteausnehmungen 5 fluchtenden Öffnungen zu versehen, etwa um Energie aus im "Graben" 31 untergebrachten Energiequellen 34 (im allgemeinsten Sinne) leichter an die Proben gelangen zu lassen. Solche Energie kann beispielsweise die Wärmeenergie einer Heizplatte sein, welche die unterhalb des Turmes 16 mit einem Analysegerät, wie einer Pipette oder Elektrode 35, stehende Probe im Becher 32 erwärmen soll (wozu dem Gerät 35 gegebenenfalls ein Thermometer zugeordnet werden kann) oder eine Ultraschallquelle. Ferner könnte die "Energiequelle" 34 von einem Magnetrührer zum Rühren der in einem Becher 32 enthaltenen Probe gebildet sein. Dabei versteht es sich, daß über eine der Leseeinrictungen 7 bzw. 7' (Fig. 1) oder 28 gegebenenfalls zwei nebeneinander im Graben 31 untergebrachte, unterschiedliche Energiequellen wahlweise ein- oder ausgeschaltet werden können. Falls dies über die Leseeinrichtung 28 erfolgen soll, ist es natürlich erforderlich, daß die Montageeinrichtung zum Anschließen eines Turmes 16 auch elektrische Stecker umfaßt.

Obwohl oben bereits auf die deutsche Patentanmeldung 10001895.5 hingewiesen worden ist, seien der Vollständigkeit halber noch Einzelheiten der Ausbildung des Turmes 16 (bzw. 16') erwähnt. Der Halter 22, der gemäß Fig. 1 in der Regel mehrere Aufnahmeöffnungen 38 für Elektroden, Pipetten, Röhrchen, Thermometer und andere Sonden aufweisen wird, ist mit einer Schlittenkonstruktion 39 verbunden, die mittels eines Kettenantriebes mit Kette 40 und Kettenrädern 41 auf- und abbewegbar ist. Die Steuerung dieses Vertikalantriebes 40, 41 erfolgt in der in der erwähnten deutschen Patentanmeldung beschriebenen Weise, um eine Sonde oder Elektrode 35 in eine darunterstehende Probe in einem Probenbecher 32 einzutauchen und wieder herauszuziehen. Die Meßdaten einer solchen Sonde 35 werden dann über eines der bereits erwähnten Kabel 13 (vgl. Fig. 1, 2) an den Computer 12 zur Auswertung übermittelt.

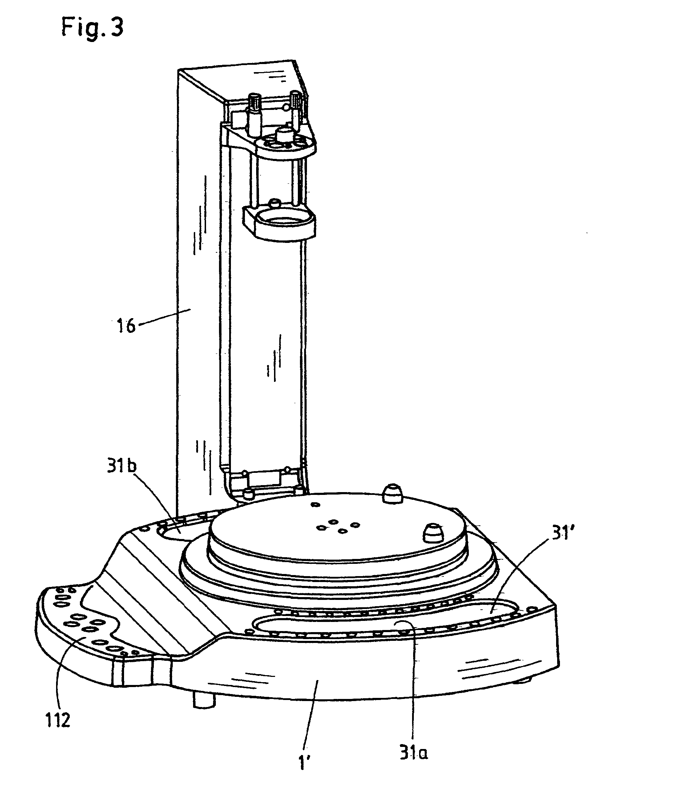

Die Ausführungsform nach Fig. 3 unterscheidet sich von der nach Fig. 1 lediglich dadurch, daß an einem Gerätegehäuse 1' das der Eingabe bzw. Programmierung dienende Tastenfeld 112 (entsprechend dem Tastenfeld 12' der Fig. 1) einteilig angeformt ist. Im allgemeinen wird es in einem solchen Falle dann wenig Sinn machen, die Ausnehmung 31 in einem geschlossenen Ring wie in Fig. 1 anzuordnen, sondern es wird günstiger sein, die Ausnehmung bzw. den "Graben" 31 nur sektorförmig zu beiden Seiten des Tastenfeldes auszubilden, weil ja im Bereiche dieses Tastenfeldes die Anbringung eines Turmes 16 eher stören würde. Diese Ausbildung kann aber den Vorteil haben, daß ein einziger Turm 16, je nach der durchzuführenden Arbeit, den Lichtverhältnissen oder aus anderen Gründen, wahlweise zur Rechten im Sektor 31a der Ausnehmung oder zur Linken im Sektor 31b montiert wird.

## Patentansprüche

1. Analysenvorrichtung mit einem Gerätegehäuse (1) mit einem Bewegungsantrieb (2) für einen Probenträger (4), der wenigstens zwei Halteanordnungen (5) für zu analysierende Proben aufweist, die mit Hilfe des Bewegungsantriebes (2) jeweils schrittweise entlang einer vorbestimmten Bahn an eine am Gerätegehäuse (1) montierte Analysiereinrichtung (16 bzw. 16') bringbar sind, **dadurch gekennzeichnet, daß** die Analysiereinrichtung (16, bzw. 16') mit Hilfe einer zerstörungsfrei lösbaren, mindestens zweiteiligen Montageeinrichtung (15, 17) am Gerätegehäuse (1) montierbar ist, von welcher Montageeinrichtung (15, 17)ein erster Montageteil (15) am Gerätegehäuse (1) und ein weiterer Montageteil (17) an der Analysiereinrichtung (16 bzw. 16') vorgesehen ist, und daß -zum Ermöglichen des Montierens mindestens zweier Analysiereinrichtungen (16, 16') oder einer solchen Einrichtung (16 bzw. 16') an beliebiger Stelle am Gerätegehäuse (1) - eine Mehrzahl der ersten Montageteile (15) jeweils einer Montageeinrichtung (15, 17) vorgesehen ist.

2. Analysenvorrichtung mit einem Gerätegehäuse (1) mit einem Bewegungsantrieb (2) für einen Probenträger (4), der wenigstens zwei Halteanordnungen (5) für zu analysierende Proben aufweist, die mit Hilfe des Bewegungsantriebes(2) jeweils schrittweise entlang einer vorbestimmten Bahn an eine am Gerätegehäuse (1) montierte Analysiereinrichtung (16 bzw. 16') bringbar sind, **dadurch gekennzeichnet, daß** mindestens zwei Analysiereinrichtungen (16, 16') am Gerätegehäuse (1) entlang einer Bewegungsbahn von auf einem Probeträger (4) gehaltenen Proben (32) befestigt sind.

3. Analysenvorrichtung nach Anspruch 1 oder 2, **dadurch gekennzeichnet, daß** der Bewegungsantrieb (2) ein Drehantrieb für einen scheibenförmigen Probenträger (4) ist.

4. Analysenvorrichtung nach Anspruch 3, **dadurch gekennzeichnet, daß** die Mehrzahl von ersten Montageteilen (15) am Gerätegehäuse (1) mindestens über einen Teil eines gedachten Kreises angeordnet ist.

5. Analysenvorrichtung nach einem der vorhergehenden Ansprüche, **dadurch gekennzeichnet, daß** die Mehrzahl von ersten Montageteilen (15) an einem aufrecht stehenden Flansch (14) des Gerätegehäuses (1) vorgesehen sind, der mindestens zwei zueinander einen Winkel, vorzugsweise von 90°, einschließende Abstützflächen (14', 19) für die daran anzubringende Analysiereinrichtung (16 bzw. 16') aufweist.

6. Analysenvorrichtung nach Anspruch 5, **dadurch gekennzeichnet, daß** zum Ermöglichen einer das Gerätegehäuse (1) umgreifenden Montage der Analysiereinrichtung (16 bzw. 16') auch eine dritte, zu einer ersten Abstützfläche (14) etwa parallele Abstützfläche (37) an der Unterseite des Gerätegehäuses (1) vorgesehen ist.

7. Analysenvorrichtung nach Anspruch 5 oder 6, **dadurch gekennzeichnet, daß** der Flansch (14) eine mindestens teilweise ringförmige Ausnehmung (31) begrenzt, in welcher mindestens eine Energiequelle (34) untergebracht ist.

8. Analysenvorrichtung nach einem der vorhergehenden Ansprüche, **dadurch gekennzeichnet, daß** jeder Analysiereinrichtung (16 bzw. 16') mit Hilfe mindestens eines Programmgebers (12, 27) wenigstens ein vorbestimmtes Analysenprogramm zuordenbar ist.

9. Analysenvorrichtung nach Anspruch 8, **dadurch gekennzeichnet, daß** mit Hilfe mindestens eines Programmgebers (12, 27) mindestens zwei Analysenprogramme zuordenbar sind, und daß die Auswahl der Analysenprogramme mit Hilfe einer anschließbaren Steuereinrichtung (12) erfolgt

10. Analysenvorrichtung nach Anspruch 9, **dadurch gekennzeichnet, daß** die Steuereinrichtung (12) von einem auch die Ergebnisse der Analyse auswertenden Computer gebildet ist

11. Analysenvorrichtung nach Anspruch 9 oder 10, **dadurch gekennzeichnet, daß** dem Computer (12) ein Tastenfeld (12'; 112) zugeordnet ist, und daß vorzugsweise dieses Tastenfeld (112) mit dem Gerätegehäuse (1) verbunden ist.

12. Analysenvorrichtung nach einem der vorhergehenden Ansprüche, **dadurch gekennzeichnet, daß** mindestens eine Bewegungsprogrammsteuerung vorgesehen ist, durch die die Schritte des Bewegungsantriebes (2) und/oder die Aktivität der Analysiereinrichtung (16, 16') steuerbar sind.

13. Analysenvorrichtung nach Anspruch 12, **dadurch gekennzeichnet, daß** die Bewegungsprogrammsteuerung mindestens eine Probenmarkierung (8, 30) am Probenträger (4) und mindestens eine stationäre Leseeinrichtung (7, 7', 28) für die Probenmarkierung (8, 30), z.B. am Gerätegehäuse (1) und/ oder an der Analysiereinrichtung (16 bzw. 16'), umfaßt.

14. Analysenvorrichtung nach Anspruch 13, **dadurch gekennzeichnet, daß** die Probenmarkierung (30) über zumindest eine am Probenträger (4) mindestens einer Halteanordnung (5) für eine Probe zugeordnete Befestigungsanordnung (29) jeweils zerstörungsfrei lösbar anbringbar ist.

15. Analysenvorrichtung nach einem der Ansprüche 8 bis 14, **dadurch gekennzeichnet, daß** die Bewegungsprogrammsteuerung und/oder mindestens das Analysenprogramm einen Code (8, 30) am Probenträger (4) und eine Lesestation (7, 7', 28) umfassen, und daß das jeweilige Programm als ersten Schritt bei der Initiierung einen Code-Leseschritt vorgesehen hat, zu welchem Zwecke der Probenträger (4) über eine vorbestimmte Strecke, z.B. über eine ganze Umdrehung, an der Lesestation (7, 7', 28) vorbeibewegbar ist.

16. Analysiereinrichtung für eine Analysenvorrichtung nach einem der vorhergehenden Ansprüche, mit einem mindestens ein Analysengerät (35) in eine ihm zugeführte Probe absenkenden bzw. wieder herausbewegenden Halteteil (22), **dadurch gekennzeichnet, daß** sie eine zerstörungsfrei lösbare Montageeinrichtung (17-19, 36) zur Befestigung an einem Gerätegehäuse (1) aufweist.

17. Analysiereinrichtung nach Anspruch 16, **dadurch gekennzeichnet, daß** die Montageeinrichtung (17-19, 36) wenigstens zwei in einem etwa horizontalen Abstand voneinander gelegene Montagestifte, vorzugsweise Montageschrauben (17), aufweist.

18. Analysiereinrichtung nach Anspruch 16 oder 17, **dadurch gekennzeichnet, daß** die Montageeinrichtung (17-19, 36) wenigstens zwei zueinander unter einem, vorzugsweise rechten, Winkel stehende Abstützflächen (18, 19, 36) aufweist.

19. Analysiereinrichtung nach Anspruch 18, **dadurch gekennzeichnet, daß** die Montageeinrichtung (17-19, 36) drei, etwa U-förmig angeordnete Abstützflächen (18, 19, 36) aufweist.
